# EUROPEAN PATENT SPECIFICATION

(11) **EP 3 624 381 B1**
(45) Date of publication and mention of the grant of the patent: **22.10.2025**
(21) Application number: 18812864.9
(22) Date of filing: 06.06.2018
(51) Int. Cl.: H04L 5/00

(54) **RESYNCHRONIZATION TRIGGERING METHOD AND BASE STATION**
VERFAHREN ZUR RESYNCHRONISATIONSAUSLÖSUNG UND BASISSTATION
PROCÉDÉ DE DÉCLENCHEMENT DE RESYNCHRONISATION ET STATION DE BASE

(30) Priority: 08.06.2017 CN 201710427444
(43) Date of publication of application: 18.03.2020
(73) Proprietor: Huawei Technologies Co., Ltd., Longgang District Shenzhen, Guangdong 518129 (CN)
(72) Inventor: WANG, Xu, Shenzhen Guangdong 518129 (CN); CHEN, Zhaodi, Shenzhen Guangdong 518129 (CN)
(74) Representative: Isarpatent
(86) International application number: PCT/CN2018/090035
(87) International publication number: WO 2018/223977

(56) References cited:
- CN-A- 101 998 615
- CN-A- 102 918 897
- CN-A- 103 733 700
- CN-A- 107 196 750
- US-A1- 2014 179 331
- US-A1- 2017 118 606
- SRINIVAS RAMANATHAN ET AL: "ADAPTIVE FEEDBACK TECHNIQUES FOR SYNCHRONIZED MULTIMEDIA RETRIEVAL OVER INTEGRATED NETWORKS", IEEE / ACM TRANSACTIONS ON NETWORKING, IEEE / ACM, NEW YORK, NY, US, vol. 1, no. 2, 1 April 1993 (1993-04-01), pages 246 - 259, XP000385474, ISSN: 1063-6692, DOI: 10.1109/90.222931

## Description

### TECHNICAL FIELD

This application relates to the communications field, and in particular, to a resynchronization trigger method and a base station.

### BACKGROUND

As a carrier aggregation (Carrier Aggregation, CA) technology becomes increasingly mature, more requirements are posed on an uplink CA technology. To ensure demodulation performance of uplink CA, a base station sends a timing advance (Timing Advance, TA) to a terminal. The terminal maintains uplink synchronization based on the TA. In an uplink CA scenario, the terminal may send uplink data in a plurality of cells, but TAs of the plurality of cells may be different. Therefore, the terminal may need to maintain multiple timing advances (Multiple Timing Advances, MTAs) at a same time.

In the prior art, when MTAs are enabled, a base station needs to trigger resynchronization 30 milliseconds later after an uplink secondary carrier cell (Secondary Carrier Cell, SCC) is activated. A relatively long time elapses before the base station triggers resynchronization, and consequently, an uplink throughput is reduced.

In the prior art document US 2014/179331 A1, a radio station, a radio terminal, and a method for transmission timing control in a radio communications system are provided that facilitate uplink-signal synchronization management in a plurality of cell groups. The radio station calculates uplink- signal transmission timing adjustment values for respective cell groups, each of which includes at least one cell including an available uplink radio resource, and notifies the calculated uplink- signal transmission timing adjustment values TA1 and TA2 to the radio terminal (20) at a time.

The further prior art document US 2017/118606 A1 relates to a method and apparatus for synchronizing mobile station (i.e., wireless transmit/receive unit (W TRU) media flows during a collaboration session. Inter-WTRU transfer request messages, flow addition request messages and session update request messages may be exchanged between a plurality of WTRUs and a session continuity control application server (SCC-AS). Each of the messages may include a session description protocol (SDP) attribute line containing time synchronization information (e.g, a presentation time offset (PTO) information element (IE), a media flow group identity (ID) and a synchronization tolerance IE). The SCC-AS may update the time synchronization information and include the updated information in messages it sends to the WTRUs, which may re-synchronize their respective media flows based on the updated time synchronization information.

The paper by SRINIVAS RAMANATHAN ET AL: "ADAPTIVE FEEDBACK TECHNIQUES FOR SYNCHRONIZED MULTIMEDIA RETRIEVAL OVER INTEGRATED NETWORKS", IEEE / ACM TRANSACTIONS ON NETWORKING, IEEE / ACM, NEW YORK, NY, US, vol. 1, no. 2, 1 April 1993 (1993-04-01), pages 246-259 states that recent advances in networking, storage, and computer technologies are stimulating the development of multimedia on-demand services providing services similar to those of a neighborhood videotape rental store over metropolitan area networks. In this paper, there are developed intermedia synchronization techniques for multimedia on-demand retrieval over integrated networks in the absence of global clocks. In these techniques, multimedia servers use lightweight messages called feedback units transmitted by media display sites (such as audiophones and videophones, generically referred to as mediaphones) to detect asynchronies among those sites. There are presented strategies by which the multimedia server can adaptively control the feedback transmission rate from that mediaphone, so as to minimize the associated overheads without permitting the asynchrony to exceed tolerable limits. There are made comparisons which compare the performance of various resynchronization policies such as conservative, aggressive, and probabilistic. Performance evaluation of the feedback techniques indicates that their overheads are negligible; for a typical audio/video playback environment, the feedback frequency was about one in hundred. The media-specific synchronization techniques described in this paper possess an important advantage as compared to those based on clock synchronization: skipping and pausing of media units at the time of resynchronization can be based on the semantic content of the media units, thereby minimizing perceptible degradations in quality of media playback.

### SUMMARY

This application provides a resynchronization trigger method and a base station, to resolve a problem of uplink throughput reduction caused by an existing resynchronization trigger method.

This problem is solved by a method of the independent method claim 1 and the independent base station claim. Further advantageous embodiments and improvements of the present invention are listed in the dependent claims. Hereinafter, before coming to a detailed description of the embodiments of the present invention, aspects of the invention which contribute to the understanding of the invention are listed below. However, it should be observed that the invention is defined solely by the attached claims and any embodiments not falling under the scope of these claims should also be regarded as aspects and examples merely contributing to the understanding of the invention. To achieve the foregoing objective, this invention in particular provides the following technical aspects.

A first aspect of this application provides a resynchronization trigger method according to claim 1.

The base station triggers resynchronization immediately after the uplink secondary carrier cell SCC is activated. Therefore, a delay time for triggering resynchronization can be reduced, thereby increasing an uplink throughput. In addition, if no resynchronization feedback signal is received within the preset time range, the base station re-triggers resynchronization. Therefore, different terminals can be supported, and this ensures that the terminals can correctly demodulate a physical downlink control channel command.

A second aspect of this application provides a base station according to independent claim 2.

A fourth aspect of this application provides a computer readable storage medium, where the computer readable storage medium stores an instruction, and when the instruction is run on a computer, the computer is enabled to perform the foregoing resynchronization trigger method.

A fifth aspect of this application provides a computer program product including an instruction, where when the computer program product is run on a computer, the computer is enabled to perform the foregoing resynchronization trigger method.

### BRIEF DESCRIPTION OF DRAWINGS

FIG. 1 is a flowchart of a resynchronization trigger method disclosed in an embodiment of this application;
FIG. 2 is a flowchart of another resynchronization trigger method disclosed in an embodiment of this application;
FIG. 3 is a schematic structural diagram of a base station disclosed in an embodiment of this application; and
FIG. 4 is a schematic structural diagram of another base station disclosed in an embodiment of this application.

### DETAILED DESCRIPTION OF EMBODIMENTS

A resynchronization trigger method disclosed in embodiments of this application is applied to a scenario in which MTAs are enabled. Specifically, the scenario in which MTAs are enabled may be a non-co-coverage (where two cells cover different areas) scenario in CA or may be a co-coverage (where two cells cover a same area) scenario in CA.

In this embodiment, CA may be aggregation of two uplink carriers, or may be aggregation of N (where N is an integer greater than 2) uplink carriers.

In an existing protocol, a reason why a base station triggers resynchronization 30 milliseconds later after an uplink SCC is activated is as follows: Different terminals have different demodulation performance; antennas of some terminals cannot work immediately after the uplink SCC is activated; and the existing protocol specifies that an antenna startup delay time is 34 milliseconds, and correspondingly, the existing protocol specifies that the base station triggers resynchronization 30 milliseconds later after the uplink SCC is activated.

However, it is found that in a research process that if a base station triggers resynchronization immediately after an uplink SCC is activated, a probability that an existing terminal can correctly demodulate a resynchronization signal, that is, a physical downlink control channel order (Physical Downlink Control Channel order, PDCCH order), can reach 80%.

Based on the foregoing finding, this application provides a resynchronization trigger method, to reduce a resynchronization trigger delay time without reducing demodulation performance of a terminal, thereby increasing a throughput in uplink CA.

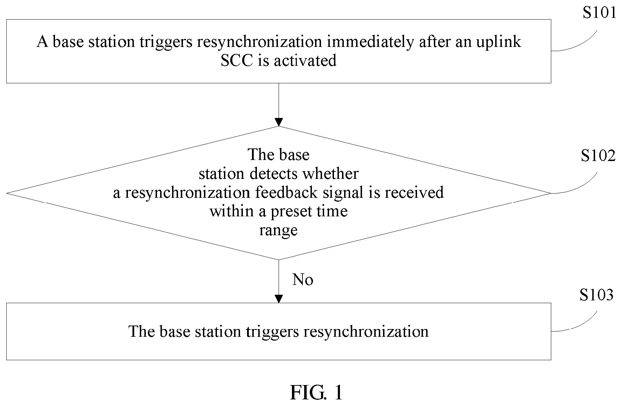

FIG. 1 shows a resynchronization trigger method disclosed in an embodiment of this application. The method includes the following steps.

S101: A base station triggers resynchronization immediately after an uplink SCC is activated.

Based on the foregoing finding, if resynchronization is triggered immediately after the uplink SCC is activated, most terminals can correctly demodulate a PDCCH order. Considering that some terminals cannot correctly demodulate the PDCCH order, the following step is performed to improve demodulation accuracy of the terminals.

S102. The base station detects whether a resynchronization feedback signal is received within a preset time range, and if not, triggers resynchronization. If yes, the base station performs a subsequent step specified in an existing protocol. Details are not described herein.

Specifically, a start moment of the preset time range is a moment T1 at which the resynchronization is triggered in S101, an end moment of the preset time range is T2, and a difference T2-T1 between T2 and T1 may be 30 milliseconds or less than 30 milliseconds.

The resynchronization feedback signal is a preamble (preamble) signal sent by a terminal.

Optionally, the base station may perform S102 based on a preset period until a current moment t1 does not belong to the preset time range.

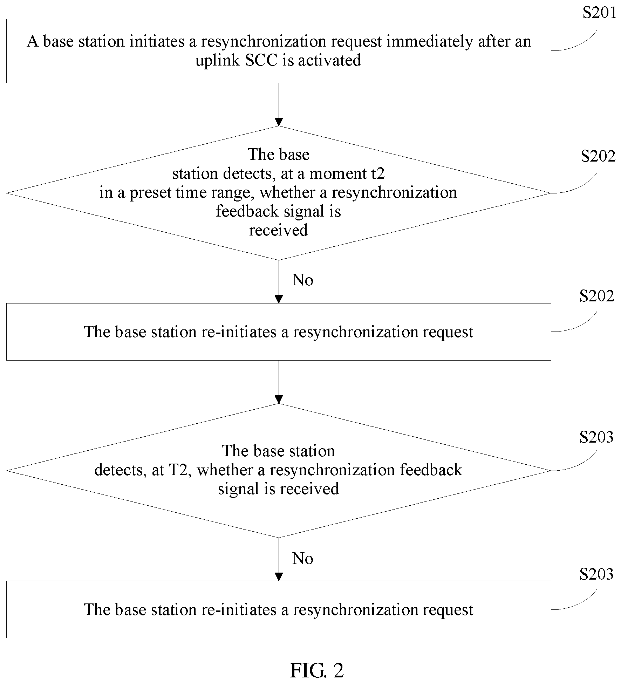

Alternatively, to reduce energy consumption and save resources, a base station may trigger resynchronization according to the process shown in FIG. 2. In FIG. 2, S202 and S203 are a specific implementation of S102.

S201: The base station initiates a resynchronization request immediately after an uplink SCC is activated.

S202: The base station detects, at a moment t2 (where t2 < T2) in the preset time range, whether a resynchronization feedback signal is received, and if not, re-initiates a resynchronization request.

S203. The base station detects, at the moment T2, whether a resynchronization feedback signal is received, and if not, initiates a resynchronization request for a last time.

It can be learned from FIG. 1 and FIG. 2 that in the resynchronization trigger method disclosed in the embodiments of this application, the base station initiates resynchronization for a first time at better timing. To be specific, the base station initiates the resynchronization request immediately after the uplink SCC is activated. This mechanism can ensure that most terminals can correctly demodulate the PDCCH order. For a terminal that cannot correctly demodulate the PDCCH order, the base station re-triggers resynchronization before a maximum delay time elapses, to ensure that performance of the terminal is not affected because timing at which the resynchronization is initiated for the first time is changed.

Optionally, the base station may not perform S203. In other words, the base station performs detection only at the moment T2, and if no resynchronization feedback signal is received, re-initiates a resynchronization request.

It should be noted that, in actual application, the step shown in S101 may be flexibly adjusted based on an actual requirement by taking both PDCCH order demodulation accuracy of terminals and resource consumption into consideration.

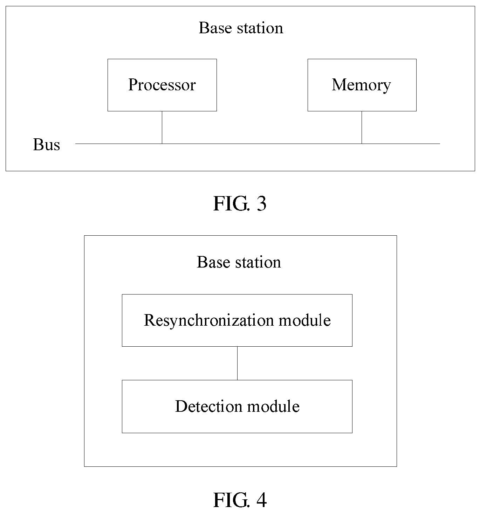

FIG. 3 shows a base station disclosed in an embodiment of this application. The base station includes a processor, and optionally, further includes a memory.

The processor is configured to trigger resynchronization immediately after an uplink secondary carrier cell SCC is activated, where a triggering moment of the resynchronization is T1; and detect whether a resynchronization feedback signal is received within a preset time range, and if not, trigger resynchronization, where a start moment of the preset time range is T1, an end moment of the preset time range is T2, and a difference between T2 and T1 is less than or equal to 30 milliseconds.

For a specific implementation process of the functions of the processor, refer to the foregoing method embodiment. Details are not described herein again.

The memory is configured to store an application program used to implement the functions of the processor and store data generated in a running process of the application program.

The base station shown in FIG. 3 initiates a resynchronization request immediately after the uplink SCC is activated, and if the base station does not receive a resynchronization feedback, the base station re-sends a resynchronization request at most 30 milliseconds later. Therefore, this can increase a throughput in uplink CA while ensuring correct demodulation by a terminal.

FIG. 4 shows a base station disclosed in an embodiment of this application. The base station includes a resynchronization module and a detection module.

The resynchronization module is configured to trigger resynchronization immediately after an uplink secondary carrier cell SCC is activated, where a triggering moment of the resynchronization is T1. The detection module is configured to detect whether a resynchronization feedback signal is received within a preset time range. The resynchronization module is further configured to: if the detection module does not receive a resynchronization feedback signal within the preset time range, trigger resynchronization, where a start moment of the preset time range is T1, an end moment of the preset time range is T2, and a difference between T2 and T1 is less than or equal to 30 milliseconds.

Specifically, the detection module may periodically detect whether a resynchronization feedback signal is received within the preset time range.

Alternatively, the detection module detects, at a moment t2 in the preset time range, whether a resynchronization feedback signal is received, and if not, detect, at the moment T2, whether a resynchronization feedback signal is received, where t2 < T2.

If the detection module does not receive a resynchronization feedback signal at the moment t2, the resynchronization module re-initiates a resynchronization request; and if the detection module does not receive a resynchronization feedback signal at the moment T2, the resynchronization module initiates a resynchronization request for a last time.

Therefore, the base station shown in FIG. 4 can increase a throughput in uplink CA while ensuring correct demodulation by a terminal. Further, a mechanism in which three resynchronization requests are initiated is used, to save resources while increasing a throughput.

## Claims

1. A resynchronization trigger method for an uplink carrier aggregation, CA, scenario, comprising:
triggering (S101), by a base station, resynchronization immediately after an uplink secondary carrier cell, SCC, is activated, wherein a triggering moment of the resynchronization is T1; and
detecting (S102), by the base station, whether a resynchronization feedback signal is received within a preset time range, and if not, triggering (S103) resynchronization, wherein a start moment of the preset time range is T1, an end moment of the preset time range is T2, and a difference between T2 and T1 is less than or equal to 30 milliseconds;
wherein the detecting (S 102), by the base station, whether the resynchronization feedback signal is received within the preset time range, and if not, triggering (S103) resynchronization comprises:
detecting (S202), by the base station at a moment t2 in the preset time range, whether the resynchronization feedback signal is received, and if not, re-initiating (S202) the resynchronization request, wherein t2 < T2; and
detecting (S203), by the base station at the moment T2, whether the resynchronization feedback signal is received, and if not, re-initiating (S203) the resynchronization request for a last time.

2. The method according to claim 1, wherein the detecting (S102), by the base station, whether the resynchronization feedback signal is received within the preset time range, and if not, triggering (S103) resynchronization comprises:
detecting, by the base station based on a second preset period, whether the resynchronization feedback signal is received within the second preset time range, and if not, triggering resynchronization, until a current moment t1 is not within the second preset time range.

3. A base station for an uplink Carrier Aggregation, CA, scenario, comprising:
a processor, configured to trigger (S101) resynchronization immediately after an uplink secondary carrier cell, SCC, is activated, wherein a triggering moment of the resynchronization is T1; and detect (S102) whether a resynchronization feedback signal is received within a preset time range, and if not, trigger (S103) resynchronization, wherein a start moment of the preset time range is T1, an end moment of the preset time range is T2, and a difference between T2 and T1 is less than or equal to 30 milliseconds; wherein
the processor is specifically configured to detect (S202), at a moment t2 in the preset time range, whether a resynchronization feedback signal is received, and if not, re-initiate (S202) the resynchronization request, wherein t2 < T2; and detect (S203), at the moment T2, whether the resynchronization feedback signal is received, and if not, re-initiate (S203) the resynchronization request for a last time.

4. The base station according to claim 3, wherein
the processor is specifically configured to detect, based on a second preset period, whether the resynchronization feedback signal is received within the second preset time range, and if not, trigger resynchronization, until a current moment t1 is not within the second preset time range.

5. A computer readable storage medium, wherein the computer readable storage medium stores an instruction, and when the instruction is run on a computer, the computer is enabled to perform the resynchronization trigger method according to any one of claims 1 to 2.

6. A computer program product comprising an instruction, wherein when the computer program product is run on a computer, the computer is enabled to perform the resynchronization trigger method according to any one of claims 1 to 2.

## Patentansprüche

1. Verfahren zur Resynchronisationsauslösung für ein Szenario mit Uplink-Träger-Aggregation (carrier aggregation, CA), umfassend:
Auslösen (S101), durch eine Basisstation, einer Resynchronisation unmittelbar nach dem Aktivieren einer Uplink-Sekundärträgerzelle (secondary carrier cell, SCC), wobei ein Auslösezeitpunkt der Resynchronisation T1 ist; und
Erkennen (S102), durch die Basisstation, ob ein Resynchronisations-Rückmeldesignal innerhalb eines voreingestellten Zeitbereichs empfangen wird, und wenn nicht, Auslösen (S103) einer Resynchronisation, wobei ein Startzeitpunkt des voreingestellten Zeitbereichs T1 ist, ein Endzeitpunkt des voreingestellten Zeitbereichs T2 ist und eine Differenz zwischen T2 und T1 kleiner oder gleich 30 Millisekunden ist;
wobei das Erkennen (S102), durch die Basisstation, ob das Resynchronisations-Rückmeldesignal innerhalb des voreingestellten Zeitbereichs empfangen wird, und, wenn nicht, Auslösen (S103) der Resynchronisation Folgendes umfasst:
Erkennen (S202), durch die Basisstation zu einem Zeitpunkt t2 innerhalb des voreingestellten Zeitbereichs, ob das Resynchronisations-Rückmeldesignal empfangen wird, und, wenn nicht, erneutes Initiieren (S202) der Resynchronisationsanforderung, wobei t2 < T2 ist; und
Erkennen (S203), durch die Basisstation zum Zeitpunkt T2, ob das Resynchronisations-Rückmeldesignal empfangen wird, und, wenn nicht, letztmaliges erneutes Initiieren (S203) der Resynchronisationsanforderung.

2. Verfahren gemäß Anspruch 1, wobei das Erkennen (S102), durch die Basisstation, ob das Resynchronisations-Rückmeldesignal innerhalb des voreingestellten Zeitbereichs empfangen wird, und, wenn nicht, Auslösen (S103) der Resynchronisation Folgendes umfasst:
Erkennen, durch die Basisstation basierend auf einer zweiten voreingestellten Zeitspanne, ob das Resynchronisations-Rückmeldesignal innerhalb des zweiten voreingestellten Zeitbereichs empfangen wird, und, wenn nicht, Auslösen einer Resynchronisation, bis ein aktueller Zeitpunkt t1 nicht innerhalb des zweiten voreingestellten Zeitbereichs liegt.

3. Basisstation für ein Szenario mit Uplink-Träger-Aggregation (CA), umfassend:
einen Prozessor, der dazu konfiguriert ist, unmittelbar nach einem Aktivieren einer Uplink-Sekundärträgerzelle (SCC) eine Resynchronisation auszulösen (S101), wobei ein Auslösezeitpunkt der Resynchronisation T1 ist; und zu erfassen (S102), ob ein Resynchronisations-Rückmeldesignal innerhalb eines voreingestellten Zeitbereichs empfangen wird, und wenn nicht, eine Resynchronisation auszulösen (S103), wobei ein Startzeitpunkt des voreingestellten Zeitbereichs T1 ist, ein Endzeitpunkt des voreingestellten Zeitbereichs T2 ist und eine Differenz zwischen T2 und T1 kleiner oder gleich 30 Millisekunden ist; wobei
der Prozessor insbesondere dazu konfiguriert, zu einem Zeitpunkt t2 im voreingestellten Zeitbereich zu erkennen (S202), ob ein Resynchronisations-Rückmeldesignal empfangen wird, und, wenn nicht, die Resynchronisationsanforderung erneut zu initiieren (S202), wobei t2 < T2 ist; und zum Zeitpunkt T2 zu erkennen (S203), ob das Resynchronisations-Rückmeldesignal empfangen wird, und, wenn nicht, die Resynchronisationsanforderung letztmalig erneut zu initiieren (S203).

4. Basisstation gemäß Anspruch 3, wobei
der Prozessor insbesondere dazu konfiguriert ist, basierend auf einer zweiten voreingestellten Zeitspanne zu erkennen, ob das Resynchronisations-Rückmeldesignal innerhalb des zweiten voreingestellten Zeitbereichs empfangen wird, und, wenn nicht, eine Resynchronisation auszulösen, bis ein aktueller Zeitpunkt t1 nicht innerhalb des zweiten voreingestellten Zeitbereichs liegt.

5. Computerlesbares Speichermedium, wobei das computerlesbare Speichermedium eine Anweisung speichert und, wenn die Anweisung auf einem Computer ausgeführt wird, der Computer in die Lage versetzt wird, das Verfahren zur Resynchronisationsauslösung gemäß einem der Ansprüche 1 bis 2 durchzuführen.

6. Computerprogrammprodukt, umfassend eine Anweisung, wobei, wenn das Computerprogrammprodukt auf einem Computer ausgeführt wird, der Computer in die Lage versetzt wird, das Verfahren gemäß einem der Ansprüche 1 bis 2 durchzuführen.

## Revendications

1. Procédé de déclenchement de resynchronisation pour un scénario d'agrégation de porteuses, CA, de liaison montante comprenant :
le déclenchement (S101), par une station de base, d'une resynchronisation immédiatement après l'activation d'une cellule porteuse secondaire, SCC, de liaison montante dans lequel un instant de déclenchement de la resynchronisation est T1 ; et
le fait de détecter (S102), par la station de base, si un signal de rétroaction de resynchronisation est reçu dans une plage de temps prédéfinie, et si ce n'est pas le cas, le déclenchement (S103) d'une resynchronisation, dans lequel un instant de début de la plage de temps prédéfinie est T1, un instant de fin de la plage de temps prédéfinie est T2, et une différence entre T2 et T1 est inférieure ou égale à 30 millisecondes ;
dans lequel le fait de détecter (S102), par la station de base, si le signal de rétroaction de resynchronisation est reçu dans la plage de temps prédéfinie, et si ce n'est pas le cas, le déclenchement (S103) d'une resynchronisation comprend :
le fait de détecter (S202), par la station de base à un instant t2 dans la plage de temps prédéfinie, si le signal de rétroaction de resynchronisation est reçu, et si ce n'est pas le cas, la relance (S202) de la demande de resynchronisation, dans lequel t2 < T2 ; et
le fait de détecter (S203), par la station de base à l'instant T2, si le signal de rétroaction de resynchronisation est reçu, et si ce n'est pas le cas, la relance (S203) de la demande de resynchronisation une dernière fois.

2. Procédé selon la revendication 1, dans lequel le fait de détecter (S102), par la station de base, si le signal de rétroaction de resynchronisation est reçu dans la plage de temps prédéfinie, et si ce n'est pas le cas, le déclenchement (S103) d'une resynchronisation comprend :
le fait de détecter, par la station de base sur la base d'une seconde période prédéfinie, si le signal de rétroaction de resynchronisation est reçu dans la seconde plage de temps prédéfinie, et si ce n'est pas le cas, le déclenchement d'une resynchronisation, jusqu'à ce qu'un instant actuel t1 ne soit pas dans la seconde plage de temps prédéfinie.

3. Station de base pour un scénario d'agrégation de porteuses, CA, de liaison montante comprenant :
un processeur, configuré pour déclencher (S101) une resynchronisation immédiatement après l'activation d'une cellule porteuse secondaire, SCC, de liaison montante, dans laquelle un instant de déclenchement de la resynchronisation est T1 ; et détecter (S102) si un signal de rétroaction de resynchronisation est reçu dans une plage de temps prédéfinie, et si ce n'est pas le cas, déclencher (S103) une resynchronisation, dans laquelle un instant de début de la plage de temps prédéfinie est T1, un instant de fin de la plage de temps prédéfinie est T2, et une différence entre T2 et T1 est inférieure ou égale à 30 millisecondes ; dans laquelle
le processeur est spécifiquement configuré pour détecter (S202), à un instant t2 dans la plage de temps prédéfinie, si un signal de rétroaction de resynchronisation est reçu, et si ce n'est pas le cas, relancer (S202) la demande de resynchronisation, dans laquelle t2 < T2 ; et détecter (S203), à l'instant T2, si le signal de rétroaction de resynchronisation est reçu, et si ce n'est pas le cas, relancer (S203) la demande de resynchronisation une dernière fois.

4. Station de base selon la revendication 3, dans laquelle
le processeur est spécifiquement configuré pour détecter, sur la base d'une seconde période prédéfinie, si le signal de rétroaction de resynchronisation est reçu dans la seconde plage de temps prédéfinie, et si ce n'est pas le cas, déclencher une resynchronisation, jusqu'à ce qu'un instant actuel t1 ne soit pas dans la seconde plage de temps prédéfinie.

5. Support de stockage lisible par ordinateur, dans lequel le support de stockage lisible par ordinateur stocke une instruction, et lorsque l'instruction est exécutée sur un ordinateur, l'ordinateur est activé afin de réaliser le procédé de déclenchement de resynchronisation selon l'une quelconque des revendications 1 et 2.

6. Produit de programme informatique comprenant une instruction, dans lequel lorsque le produit de programme informatique est exécuté sur un ordinateur, l'ordinateur est activé afin de réaliser le procédé de déclenchement de resynchronisation selon l'une quelconque des revendications 1 et **2.**
